# EUROPEAN PATENT APPLICATION

(11) **EP 4 513 646 A1**
(43) Date of publication of application: **26.02.2025**
(21) Application number: 22958501.3
(22) Date of filing: 16.09.2022
(51) Int. Cl.: H01M 50/242, H01M 50/477

(54) **BATTERY CELL, BATTERY AND ELECTRIC DEVICE**

(71) Applicant: Contemporary Amperex Technology Co., Limited, Fujian 352100 (CN)
(72) Inventor: ZHENG, Ting, Ningde City, Fujian 352100 (CN); ZHOU, Wenlin, Ningde City, Fujian 352100 (CN); BAI, Lulu, Ningde City, Fujian 352100 (CN); LI, Quankun, Ningde City, Fujian 352100 (CN); CAI, Runchen, Ningde City, Fujian 352100 (CN)
(74) Representative: Kraus & Lederer PartGmbB
(86) International application number: PCT/CN2022/119421
(87) International publication number: WO 2024/055311

(57) **Abstract**

The present application provides a battery cell, a battery, and an electrical device, relating to the field of battery technology. The battery cell includes a shell, an electrode assembly, an end cover assembly, a support member, and a terminal assembly; the shell has an opening; the electrode assembly is accommodated in the shell; the end cover assembly is closed to the opening; the support member is disposed between the end cover assembly and a main body of the electrode assembly; at least a portion of the terminal assembly extends between the end cover assembly and the support member, and the terminal assembly is conductively connected to a tab of the electrode assembly; a first accommodating portion is disposed on a first surface, facing the end cover assembly, of the support member, and the first accommodating portion is configured to accommodate at least a portion of the terminal assembly, which can reduce the size of a whole formed by the terminal assembly and the support member in the thickness direction of the end cover assembly, reduce occupation of an internal space of the shell by the whole formed by the terminal assembly and the support member, and increase an energy density of the battery cell.

## Description

### Technical Field

The present application relates to the field of battery technology, and in particular, to a battery cell, a battery, and an electrical device.

### Background Art

At present, lithium-ion batteries are widely used in vehicles. As rechargeable batteries, the lithium-ion batteries have advantages of small size, high energy density, high power density, cycle use, long storage time, and the like.

A battery cell includes a shell and an electrode assembly accommodated in the shell. If the electrode assembly can make full use of an internal space of the shell, an energy density of the battery cell can be increased, so as to meet power demands. Therefore, how to ensure that the internal space of the shell of the battery cell can be fully used for accommodating the electrode assembly has become an urgent problem in the field of battery technology.

### Summary

Embodiments of the present application provide a battery cell, a battery, and an electrical device to increase an energy density of the battery.

In a first aspect, an embodiment of the present application provides a battery cell, including a shell, an electrode assembly, an end cover assembly, a support member, and a terminal assembly; the shell has an opening; the electrode assembly includes a main body and a tab protruding from the main body, and the electrode assembly is accommodated in the shell; the end cover assembly is closed to the opening; the support member is located in the shell and disposed between the end cover assembly and the main body; at least a portion of the terminal assembly extends between the end cover assembly and the support member, and the terminal assembly is conductively connected to the tab; and the support member has a first surface facing the end cover assembly, the first surface is provided with a first accommodating portion, and the first accommodating portion is configured to accommodate at least a portion of the terminal assembly.

In the foregoing technical solution, the first surface, facing the end cover assembly, of the support member is provided with the first accommodating portion, which can accommodate a portion of the terminal assembly extending to the support member and the end cover assembly, thereby reducing the size of a whole formed by the terminal assembly and the support member in a thickness direction of the end cover assembly, reducing occupation of an internal space of the shell by the whole formed by the terminal assembly and the support member, and increasing an energy density of the battery cell.

In some embodiments of the first aspect of the present application, the support member is provided with a first reinforcing portion, and the first reinforcing portion is disposed in the first accommodating portion.

In the foregoing technical solution, the first accommodating portion enables the strength of the support member at a corresponding position of the first accommodating portion to be lower than that of the support member at other positions, and the first reinforcing portion is disposed in the first accommodating portion to increase the strength of the support member at the corresponding position of the first accommodating portion and improve the supporting ability of the support member.

In some embodiments of the first aspect of the present application, the first reinforcing portion includes a first portion and a second portion, the terminal assembly includes a current collecting member extending between the end cover assembly and the support member, a projection of the first portion on the support member does not overlap with that of the current collecting member on the support member in the thickness direction of the end cover assembly, and the second portion is located between the current collecting member and a bottom surface of the first accommodating portion.

In the foregoing technical solution, the projection of the first portion of the first reinforcing portion on the support member does not overlap with that of the current collecting member on the support member, the second portion is located between the current collecting member and the bottom surface of the first accommodating portion, and the first reinforcing portion reinforces the corresponding position of the first accommodating portion as much as possible, so as to further increase the structural strength of the support member.

In some embodiments of the first aspect of the present application, in the thickness direction of the end cover assembly, a surface, facing the end cover assembly, of the first portion is closer to the first surface than a surface, facing the end cover assembly, of the second portion.

In the foregoing technical solution, the surface, facing the end cover assembly, of the first portion is closer to the first surface than the surface, facing the end cover assembly, of the second portion of the first reinforcing portion between the current collecting member and the bottom surface of the first accommodating portion, so a side, facing the end cover assembly, of the second portion provides a larger space for accommodating the current collecting member, and the current collecting member can be accommodated in the first accommodating portion as much as possible in the thickness direction of the end cover assembly, thereby reducing occupation of the internal space of the shell by a whole formed by the current collecting member and the support member, reducing occupation of the internal space of the shell by the whole formed by the terminal assembly and the support member, and increasing the energy density of the battery cell.

In some embodiments of the first aspect of the present application, the terminal assembly includes a current collecting member extending between the end cover assembly and the support member, and a projection of the current collecting member on the support member does not overlap with that of the first reinforcing portion on the support member in the thickness direction of the end cover assembly.

In the foregoing technical solution, the projection of the current collecting member on the support member does not overlap with that of the first reinforcing portion on the support member, that is, the first reinforcing portion avoids the current collecting member, which can not only increase the structural strength of the support member at the corresponding position of the first accommodating portion, but also prevent mutual interference between the current collecting member and the first reinforcing portion from affecting the placement of the current collecting member.

In some embodiments of the first aspect of the present application, the first accommodating portion includes a first accommodating region and a second accommodating region in communication, a depth of the first accommodating region is greater than that of the second accommodating region in the thickness direction of the end cover assembly, the current collecting member is accommodated in the first accommodating region, and the first reinforcing portion is located in the second accommodating region.

In the foregoing technical solution, the current collecting member is accommodated in the deeper first accommodating region, and the first accommodating region provides a larger space for accommodating the current collecting member. The first reinforcing portion is located in the second accommodating region, and the first reinforcing portion avoids the current collecting member, which can not only increase the structural strength of the support member at the corresponding position of the first accommodating portion, but also prevent mutual interference between the current collecting member and the first reinforcing portion from affecting the placement of the current collecting member.

In some embodiments of the first aspect of the present application, the support member is provided with a first protrusion, and the first protrusion protrudes from the first surface towards the end cover assembly.

In the foregoing technical solution, the first protrusion can support the end cover assembly in a process of deformation of the end cover assembly towards the interior of the shell, alleviate collapse of the end cover assembly, and alleviate stress on the support member, thereby alleviating extrusion on the electrode assembly.

In some embodiments of the first aspect of the present application, in the thickness direction of the end cover assembly, the first protrusion is spaced from the end cover assembly.

In the foregoing technical solution, the first protrusion is spaced from the end cover assembly in the thickness direction of the end cover assembly, which provides a space for the deformation of the end cover assembly towards the interior of the shell, and can achieve a buffering effect when the end cover assembly is subjected to external impact, so as to protect the end cover assembly.

In some embodiments of the first aspect of the present application, the first protrusion is disposed at one end of the support member in a first direction, the first accommodating portion extends to the first protrusion, and the first direction is perpendicular to the thickness direction of the end cover assembly.

In the foregoing technical solution, the first protrusion is disposed at one end of the support member in the first direction to reduce a risk of interference between the first protrusion and other structures (such as the current collecting member) located between the support member and the end cover assembly.

In some embodiments of the first aspect of the present application, the first protrusions are disposed at two ends of the support member in the first direction.

In the foregoing technical solution, the first protrusions are disposed at the two ends of the support member in the first direction, so when the first protrusions support the end cover assembly, the end cover assembly can be evenly stressed, which is conducive to alleviating the deformation of the end cover assembly.

In some embodiments of the first aspect of the present application, the first protrusion is provided with an avoidance gap for avoiding the extension of the terminal assembly between the support member and the end cover.

In the foregoing technical solution, the avoidance gap facilitates mounting of the terminal assembly.

In some embodiments of the first aspect of the present application, the support member is connected to the end cover assembly, so as to fix the support member to the end cover assembly.

In the foregoing technical solution, the support member is fixedly connected to the end cover assembly, which can improve the stability of the support member in the shell to support the main body of the electrode assembly more stably, thereby improving the stability of the electrode assembly in the shell.

In some embodiments of the first aspect of the present application, the support member is connected to the end cover assembly by hot melting, laser welding, or ultrasonic welding, or the support member is bonded with the end cover assembly by a bonding member.

In the foregoing technical solution, the support member is connected to the end cover assembly by hot melting, laser welding, or ultrasonic welding, or the support member is bonded with the end cover assembly by a bonding member, so the connection is simple and high-precision positioning is not required in the connection process.

In some embodiments of the first aspect of the present application, a first connecting portion is disposed on at least one end of the support member in the first direction; the end cover assembly has a second connecting portion, the second connecting portion corresponds to the first connecting portion one to one, the second connecting portion is opposite to the support member in the first direction, and the first direction is perpendicular to the thickness direction of the end cover assembly; and the first connecting portion abuts against the second connecting portion in the thickness direction of the end cover assembly.

In the foregoing technical solution, the first connecting portion abuts against the second connecting portion in the thickness direction of the end cover assembly to fix the support member to the end cover assembly, so the connection is simple and convenient.

In some embodiments of the first aspect of the present application, in the thickness direction of the end cover assembly, the second connecting portion has a second surface facing the main body, the second surface is provided with a second accommodating portion, and the second accommodating portion is used for accommodating the first connecting portion.

In the foregoing technical solution, the second accommodating portion is disposed on the second surface of the second connecting portion facing the main body, where the second accommodating portion can reduce the size of the overall structure formed by the support member and the end cover assembly in the thickness direction of the end cover assembly, and reduce the occupation of the internal space of the shell by the support member.

In some embodiments of the first aspect of the application, in the thickness direction of the end cover assembly, the first connecting portion has a third surface facing the main body, and the distance between the second surface and the third surface is H, which satisfies H ≤ 2 mm.

In the foregoing technical solution, the distance between the third surface of the second surface facing the main body and the third surface of the first connecting portion facing the main body is less than or equal to 2 mm, which alleviates a problem of interference with other structures in the shell due to the size of the first connecting portion extending out of the first accommodating portion in the thickness direction of the end cover assembly, or alleviates a problem of inconvenient mounting due to excessive depression of the first connecting portion into the first accommodating portion in the thickness direction of the end cover assembly, and can also alleviate a problem of local force on the electrode assembly due to an excessive height difference between the second surface and the third surface in the thickness direction of the end cover assembly, thereby reducing a risk of uneven force on the main body of the electrode assembly due to an excessive position difference between the second surface and the third surface.

In some embodiments of the first aspect of the present application, the second surface and the third surface are coplanar.

In the foregoing technical solution, if the second surface and the third surface are coplanar, there is no height difference between the second surface and the third surface in the thickness direction of the end cover assembly, which prevents local force on the electrode assembly at corresponding positions of the second surface and the third surface, and is conducive to even force on the main body of the electrode assembly.

In some embodiments of the first aspect of the present application, the first connecting portion is provided with a second reinforcing portion, and the second reinforcing portion is connected to one end of the support member in the first direction.

In the foregoing technical solution, the second reinforcing portion can increase the strength of the first connecting portion and improve the stability of connection between the first connecting portion and the second connecting portion.

In some embodiments of the first aspect of the present application, in the thickness direction of the end cover assembly, the second reinforcing portion is disposed on a fourth surface, facing the end cover assembly, of the first connecting portion, and the second reinforcing portion is used for abutting against the second connecting portion.

In the foregoing technical solution, the second reinforcing portion is used for abutting against the second connecting portion, so in the process of deformation of the end cover assembly towards the interior of the shell under force, the second reinforcing portion can also alleviate the force on the first connecting portion, thereby reducing a risk of damage of the first connecting portion.

In some embodiments of the first aspect of the present application, the fourth surface is further provided with a fusion portion, and the fusion portion is used for connecting the first connecting portion and the second connecting portion after melting.

In the foregoing technical solution, the fusion portion can reduce a risk of strength decrease caused by melting of the first connecting portion and the second connecting portion when the first connecting portion and the second connecting portion are connected.

In some embodiments of the first aspect of the present application, a plurality of fusion portions are further disposed on the fourth surface, some of the fusion portions are located on one side of the second reinforcing portion in a second direction, the other of the fusion portions are located on the other side of the second reinforcing portion in the second direction, and the first direction, the thickness direction of the end cover assembly, and the second direction are perpendicular to each other.

In the foregoing technical solution, the fusion portions are disposed on two sides of the second reinforcing portion in the second direction, and the fusion portions can be melted on the two sides of the second reinforcing portion to connect the first connecting portion and the second connecting portion, thereby improving connection stability.

In some embodiments of the first aspect of the present application, the fusion portion protrudes from the fourth surface.

In the foregoing technical solution, the fusion portion protrudes from the fourth surface, so when the first connecting portion and the second connecting portion are connected, only the fusion portion is melted, but the first connecting portion is not melted, which ensures the strength of the first connecting portion.

In some embodiments of the first aspect of the present application, the support member is used for supporting the main body.

In the foregoing technical solution, the support member supports the main body to limit the electrode assembly within the shell, so as to alleviate the degree of shaking of the electrode assembly within the shell.

In some embodiments of the first aspect of the present application, the tab is bent around a first edge of the support member, and the first edge is an edge of the support member in its width direction.

In the foregoing technical solution, the tab is bent around the first edge of the support member, and the support member can support the tab to prevent the tab from being inversely inserted into the main body.

In some embodiments of the first aspect of the present application, the support member has a fifth surface facing the main body and abutting against the main body in the thickness direction of the end cover, the fifth surface comprises a support portion and two edge portions, the two edge portions are connected to two sides of the support portion separately in the width direction of the support member, and the edge portions tilt from the support portion towards the end cover assembly gradually.

In the foregoing technical solution, the edge portion tilts from the support portion towards the end cover assembly gradually, and the support member forms a space between the position corresponding to the edge portion and the main body to accommodate the tab, so that the tab can be folded around the first edge.

In a second aspect, an embodiment of the present application provides a battery, including a box and the battery cell provided by the embodiments of the first aspect, where the battery cell is accommodated in the box.

In a third aspect, an embodiment of the present application provides an electrical device, including the battery provided by the embodiment of the second aspect.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of a vehicle provided by some embodiments of the present application;
FIG. 2 is an exploded view of a battery provided by some embodiments of the present application;
FIG. 3 is an exploded view of a battery cell provided by some embodiments of the present application;
FIG. 4 is a schematic structural diagram of a support member provided by other embodiments of the present application;
FIG. 5 is a schematic structural diagram of a support member provided by still other embodiments of the present application;
FIG. 6 is a schematic structural diagram of a support member provided by still other embodiments of the present application;
FIG. 7 is a schematic structural diagram of a support member provided by still other embodiments of the present application;
FIG. 8 is a cross-sectional view of an end cover assembly and a support member provided by some embodiments of the present application after assembly;
FIG. 9 is a schematic structural diagram of a current collecting member and an end cover assembly provided by some embodiments of the present application after assembly;
FIG. 10 is a schematic structural diagram of an electrode terminal and a support member provided by some embodiments of the present application after assembly;
FIG. 11 is a partial schematic diagram of a support member provided by some embodiments of the present application;
FIG. 12 is a schematic structural diagram of a support member provided by still other embodiments of the present application;
FIG. 13 is an enlarged view of position A in FIG. 12;
FIG. 14 is a schematic structural diagram of a support member provided by still other embodiments of the present application;
FIG. 15 is an enlarged view of position B in FIG. 14;
FIG. 16 is a schematic structural diagram of a support member provided by still other embodiments of the present application;
FIG. 17 is a schematic structural diagram of a support member provided by still other embodiments of the present application;
FIG. 18 is a partial schematic diagram of a structure after an electrode terminal and a support member provided by some embodiments of the present application are assembled;
FIG. 19 is a schematic structural diagram of a battery cell provided by other embodiments of the present application;
FIG. 20 is a cross-sectional view taken along line E-E in FIG. 19;
FIG. 21 is a schematic structural diagram of a support member provided by some embodiments of the present application; and
FIG. 22 is a schematic structural diagram of an end cover assembly provided by some embodiments of the present application.

Reference numerals: 1000 - vehicle; 100 - battery; 10 - box; 11 - first box; 12 - second box; 20 - battery cell; 21 - shell; 211 - opening; 22 - electrode assembly; 221 - main body; 222 - tab; 222a - positive tab; 222b - negative tab; 23 - end cover assembly; 231 - end cover; 232 - insulating member; 2321 - second protrusion; 233 - pressure relief mechanism; 234 - second connecting portion; 2341 - second surface; 2342 - second accommodating portion; 235 - first liquid injection hole; 24 - support member; 241 - first surface; 242 - first accommodating portion; 2421 - first accommodating region; 2422 - second accommodating region; 2423 - step; 243 - first reinforcing portion; 2431 - first portion; 24311 - first abutting surface; 2432 - second portion; 24321 - second abutting surface; 244 - first edge; 246 - fifth surface; 2461 - support portion; 2462 - edge portion; 247 - third accommodating portion; 248 - exhaust hole; 249 - second liquid injection hole; 25 - terminal assembly; 251 - electrode terminal; 252 - current collecting member; 2521 - body portion; 2522 - first conductive portion; 26 - first protrusion; 261 - avoidance gap; 27 - first connecting portion; 271 - third surface; 272 - fourth surface; 28 - second reinforcing portion; 281 - first reinforcing segment; 282 - second reinforcing segment; 283 - third reinforcing segment; 29 - fusion portion; 200 - controller; 300 - motor; X - thickness direction of the end cover assembly; Y - first direction; Z - second direction.

### Detailed Description of Embodiments

In order to make the objectives, technical solutions and advantages of the embodiments of the present application clearer, the technical solutions in the embodiments of the present application will be described clearly and completely below in conjunction with the accompanying drawings in the embodiments of the present application. Apparently, the described embodiments are some of the embodiments of the present application, not all of them. Generally, components of the embodiments of the present application described and shown in the drawings may be arranged and designed with various different configurations.

Therefore, the detailed descriptions of the embodiments of the present application provided in the drawings below are not intended to limit the scope of the present application, but are merely representatives of the selected embodiments of the present application. All other embodiments obtained by those of ordinary skill in the art based on the embodiments of the present application without creative efforts shall fall within the protection scope of the present application.

It should be noted that the embodiments in the present application and the features in the embodiments may be combined with each other on a non-conflict basis.

It should be noted that similar reference numerals and letters in the following drawings represent similar terms, so once a term is defined in a drawing, further definition and explanation are not required in the follow-up drawings.

In the description of the embodiments of the present application, indicative orientations or positional relationships are orientations or positional relationships shown based on the drawings, or commonly placed orientations or positional relationships when the product of the present application is used, or orientations or positional relationships commonly understood by those skilled in the art, are merely for convenience of describing the present application and for simplifying the description, but not for indicating or implying that an indicated apparatus or element must have a specific orientation, and must be constructed and operated in a specific orientation, and therefore, cannot be understood as limiting the present application. In addition, the terms "first", "second", "third", and the like are merely used for distinguishing the description and cannot be construed as indicating or implying relative importance.

At present, in view of the development of the market situation, use of power batteries is increasingly widespread. Power batteries are not only used in energy storage power systems such as hydropower, firepower, wind power, and solar power plants, but also widely used in electric vehicles such as electric bicycles, electric motorcycles, and electric vehicles, as well as in various fields such as military equipment and aerospace. With the continuous expansion of the application fields of power batteries, their market demand is also increasing.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells. The box may prevent liquid or other foreign matters from affecting charging or discharging of the battery cells.

In the present application, "a plurality of" means two (inclusive) or more.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, cubic battery cells, and soft package battery cells, which are also not limited by the embodiments of the present application.

The battery cell includes an electrode assembly and an electrolytic solution, and the electrode assembly is composed of a positive electrode sheet, a negative electrode sheet, and a separator. The battery cell mainly relies on migration of metal ions between the positive electrode sheet and the negative electrode sheet to work. The positive electrode sheet includes a positive electrode current collector and a positive electrode active material layer, a surface of the positive electrode current collector is coated with the positive electrode active material layer, and the positive electrode current collector not coated with the positive electrode active material layer protrudes from the positive electrode current collector coated with the positive electrode active material layer and is used as a positive electrode tab. In an example of a lithium-ion battery, a material of the positive electrode current collector may be aluminum, and a positive electrode active material may be lithium cobaltate, lithium iron phosphate, ternary lithium, lithium manganate, or the like. The negative electrode sheet includes a negative electrode current collector and a negative electrode active material layer, a surface of the negative electrode current collector is coated with the negative electrode active material layer, and the negative electrode current collector not coated with the negative electrode active material layer protrudes from the negative electrode current collector coated with the negative electrode active material layer and is used as a negative electrode tab. A material of the negative electrode current collector may be copper, and a negative electrode active material may be carbon, silicon, or the like. In order to ensure that no fusing occurs when high current passes through, there is a plurality of positive electrode tabs laminated together, and there is a plurality of negative electrode tabs laminated together. A material of the separator may be polypropylene (PP), polyethylene (PE), or the like. Moreover, the electrode assembly may be of a wound structure or a laminated structure, and the embodiments of the present application are not limited thereto.

The development of battery technology needs to consider various design factors simultaneously, such as safety performance, cycle life, discharge capacity, charge and discharge rates, and other performance parameters of batteries. In addition, energy densities of the batteries should also be considered.

The inventor noticed that a battery cell includes a shell, an electrode assembly, an end cover assembly, and a terminal assembly. The end cover assembly covers an opening of the shell, the electrode assembly is accommodated in the shell, and the terminal assembly is disposed on the end cover assembly and extends into the shell to conductively connect with tabs of the electrode assembly, for charging and discharging through the terminal assembly. Due to the lack of fixing measures, the electrode assembly may shake inside the shell, making the electrode assembly susceptible to damage.

In order to alleviate the shaking problem of the electrode assembly inside the shell, a support member may be disposed inside the shell. In a thickness direction of the end cover assembly, the support member is disposed between the end cover assembly and a main body of the electrode assembly. The support member can support the main body to limit the degree of shaking of the electrode assembly inside the shell. However, the support member occupies space inside the shell, thereby decreasing the energy density of the battery cell.

Based on the foregoing considerations, in order to alleviate the problem of decrease in the energy density of the battery cell due to the configuration of the support member, the inventor designed a battery cell after in-depth research, where a support member of the battery cell has a first surface facing an end cover assembly, the first surface is provided with a first accommodating portion, and the first accommodating portion is configured to accommodate at least a portion of the terminal assembly extending between the end cover assembly and the support member.

The first surface, facing the end cover assembly, of the support member is provided with the first accommodating portion, which can accommodate at least a portion of the terminal assembly extending to the support member and the end cover assembly, thereby reducing the size of a whole formed by the terminal assembly and the support member in the thickness direction of the end cover assembly, reducing occupation of the internal space of the shell by the whole formed by the terminal assembly and the support member, and increasing the energy density of the battery cell.

The battery cell disclosed in the embodiments of the present application may be used, but not limited to, in an electrical device such as a vehicle, a ship, or an aircraft. A power system of the electrical device may be constituted by the battery cells, the battery, or the like disclosed in the present application, which is beneficial to alleviating and automatically adjusting deterioration of cell expansion force, supplementing consumption of an electrolytic solution, improving the stability of battery performance, and prolonging battery life.

An embodiment of the present application provides an electrical device using a battery as a power source. The electrical device may be, but is not limited to, a mobile phone, a tablet computer, a notebook computer, an electric toy, an electric tool, a scooter, an electric vehicle, a ship, or a spacecraft. The electric toy may include a fixed or mobile electric toy, such as a game console, an electric car toy, an electric ship toy, or an electric aircraft toy. The spacecraft may include an airplane, a rocket, a space shuttle, a spaceship, or the like.

For convenient description, the following embodiments are described by an example of a vehicle 1000 as an electrical device in an embodiment of the present application.

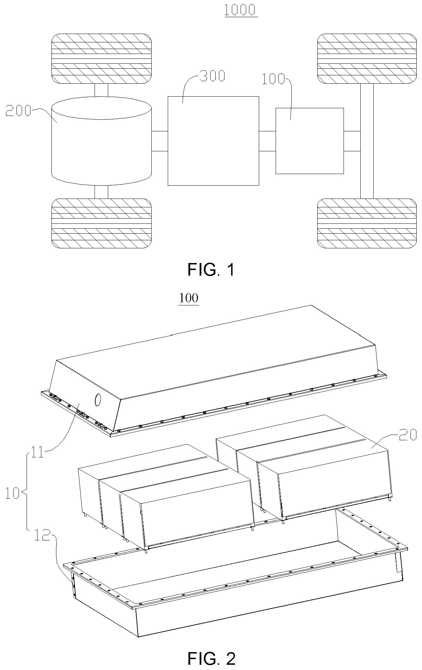

Refer to FIG. 1. FIG. 1 is a schematic structural diagram of a vehicle 1000 provided by some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be used to supply power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Refer to FIG. 2. FIG. 2 is an exploded view of a battery 100 provided by some embodiments of the present application. The battery 100 includes a box 10 and battery cells 20, where the battery cells 20 are accommodated in the box 10. The box 10 is used for providing an accommodating space for the battery cells 20, and the box 10 may have many structures. In some embodiments, the box 10 may include a first box 11 and a second box 12, the first box 11 and the second box 12 cover each other, and the first box 11 and the second box 12 jointly confine an accommodating space for accommodating the battery cells 20. The second box 12 may be of a hollow structure with an opening at one end to form an accommodating cavity for accommodating the battery cells 20, the first box 11 may be of a plate-like structure, and the first box 11 is closed to an opening side of the second box 12, so that the first box 11 and the second box 12 jointly confine the accommodating space. Alternatively, each of the first box 11 and the second box 12 may be of a hollow structure with an opening on one side to form an accommodating cavity for accommodating the battery cells 20, and the opening side of the first box 11 is closed to the opening side of the second box 12. Of course, the box 10 formed by the first box 11 and the second box 12 may be in various shapes, such as cylindrical or rectangular.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box 10. Of course, the battery 100 may alternatively be in a form of a battery module formed by first connecting the plurality of battery cells 20 in series, in parallel, or in series and parallel, and a plurality of battery modules are then connected in series, in parallel, or in series and parallel to form a whole accommodated in the box 10. The battery 100 may further include other structures, for example, the battery 100 may further include a current collecting component for achieving electrical connection between the plurality of battery cells 20.

Each battery cell 20 may be a secondary battery or a primary battery, or may be a lithium-sulfur battery, a sodium-ion battery, or a magnesium-ion battery, but is not limited to this. The battery cell 20 may be cylindrical, flat, cuboid, or in other shapes.

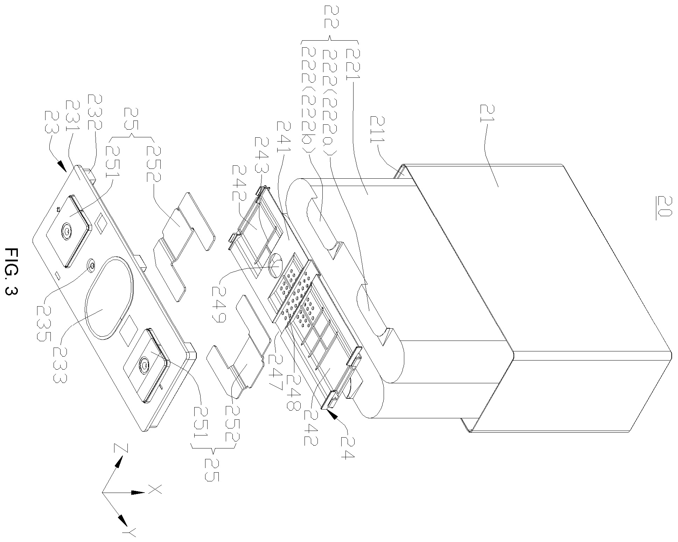

Refer to FIG. 3. FIG. 3 is an exploded view of the battery cell 20 provided by some embodiments of the present application. The battery cell 20 includes a shell 21, an electrode assembly 22, an end cover assembly 23, a support member 24, and a terminal assembly 25; the shell 21 has an opening 211; the electrode assembly 22 includes a main body 221 and a tab 222 protruding from the main body 221, and the electrode assembly 22 is accommodated in the shell 21; the end cover assembly 23 is closed to the opening 211; the support member 24 is located in the shell 21 and disposed between the end cover assembly 23 and the main body 221; at least a portion of the terminal assembly 25 extends between the end cover assembly 23 and the support member 24, and the terminal assembly 25 is conductively connected to the tab 222; and the support member 24 has a first surface 241 facing the end cover assembly 23, the first surface 241 is provided with a first accommodating portion 242, and the first accommodating portion 242 is configured to accommodate at least a portion of the terminal assembly 25.

The shell 21 is a component fitting an end cover 231 to form an internal environment of the battery cell 20, where the formed internal environment may be used for accommodating the electrode assembly 22, an electrolytic solution, and other components. The shell 21 and the end cover 231 may be independent components, the opening 211 may be disposed on the shell 21, and the end cover 231 is closed to the opening 211 to form the internal environment of the battery cell 20. Unlimitedly, the end cover 231 and the shell 21 may be integrated. Specifically, the end cover 231 and the shell 21 may form a common connection surface before other components are put into the shell. When the interior of the shell 21 is to be encapsulated, the end cover 231 is closed to the shell 21. The shell 21 may be in many shapes and sizes, such as cuboid, cylinder, or hexagonal prism. Specifically, the shape of the shell 21 may be determined according to a specific shape and size of the electrode assembly 22. A material of the shell 21 may be various, such as copper, iron, aluminum, stainless steel, aluminum alloy, or plastic, and is not specially limited in the embodiments of the present application.

The electrode assembly 22 is a component that undergoes electrochemical reactions in the battery cell 20. The shell 21 may contain one or more electrode assemblies 22. The electrode assembly 22 is mainly formed by winding or laminating a positive electrode sheet and a negative electrode sheet, and a separator is usually disposed between the positive electrode sheet and the negative electrode sheet. Portions of the positive electrode sheet and the negative electrode sheet that contain active materials constitute the main body 221 of the electrode assembly 22, while portions of the positive electrode sheet and the negative electrode sheet that do not contain active materials constitute the tabs 222, that is, a portion of the positive electrode sheet that does not contain an active material forms a positive tab 222a, while a portion of the negative electrode sheet that does not contain an active material forms a negative tab 222a. The positive tab 222a and the negative tab 222b may be jointly located at one end of the main body 221 or separately located at two ends of the main body 221. In charging and discharging processes of the battery 100, the positive and negative electrode active materials react with the electrolytic solution, and the tabs 222 are connected to the terminal assembly 25 to form a current circuit.

The shell 21 may have one opening 211 or two opposite openings 211. The end cover assembly 23 may be in one-to-one correspondence with the opening 211 of the shell 21. When the shell 21 has two openings 211, there are two end cover assemblies 23, and the two end cover assemblies 23 are used for sealing the two openings 211 separately.

The end cover assembly 23 includes an end cover 231 and an insulating member 232. The end cover 231 refers to a component that is closed to the opening 211 of the shell 21 to isolate the internal environment of the battery cell 20 from the external environment. Unlimitedly, a shape of the end cover 231 may adapt to that of the shell 21 to fit the shell 21. Optionally, the end cover 231 may be made of a material with certain hardness and strength (such as aluminum alloy). In this case, the end cover 231 is less prone to deformation during squeezing deformation, so that the battery cell 20 can have higher structural strength and its safety can be improved. The insulating member 232 is disposed on an inner side of the end cover 231 and located between the end cover 231 and the support member 24. The insulating member 232 may be used for isolating electrical connection components inside the shell 21 from the end cover 231 to reduce a risk of short-circuiting. For example, the insulating member 232 may be made of plastic, rubber, or the like.

Functional components such as the terminal assembly 25 may be disposed on the end cover 231. The terminal assembly 25 may be used for electrical connection with the electrode assembly 22 to output or input electrical energy of the battery cell 20. In some embodiments, a pressure relief mechanism 233 may be further disposed on the end cover 231 to release internal pressure when the internal pressure or temperature of the battery cell 20 reaches a threshold. A material of the end cover 231 may be various, such as copper, iron, aluminum, stainless steel, aluminum alloy, or plastic, and is not specially limited in the embodiments of the present application.

The electrode assembly 22 has a positive tab 222a and a negative tab 222b. The positive tab 222a and the negative tab 222b may be located on the same side of the electrode assembly 22 or on two opposite sides of the electrode assembly 22.

In an embodiment where the shell 21 has an opening 211 and an end cover assembly 23, one of the positive tab 222a and the negative tab 222b is electrically connected to the terminal assembly 25 disposed on the end cover assembly 23, the other of the positive tab 222a and the negative tab 222b may be conductively connected to the shell 21, and the terminal assembly 25 and the shell 21 form two electrodes of the battery cell 20 with opposite polarities separately. In an embodiment where the shell 21 has two openings 211 and two end cover assemblies 23, the terminal assembly 25 on one end cover assembly 23 is electrically connected to the positive tab 222a, the terminal assembly 25 on the other end cover assembly 23 is electrically connected to the negative tab 222b, and the terminal assemblies 25 on the two end cover assemblies 23 form two electrodes of the battery cell 20 with opposite polarities separately.

In an embodiment where the shell 21 has an opening 211 and an end cover assembly 23, two terminal assemblies 25 may alternatively be disposed on the end cover assembly 23, and the two terminal assemblies 25 are electrically connected to the positive tab 222a and the negative tab 222b separately.

In an embodiment where the battery cell 20 includes two end cover assemblies 23, the support member 24 may be disposed between only one end cover assembly 23 and the main body 221, or the support member 24 may be disposed between each end cover assembly 23 and the main body 221.

The terminal assembly 25 includes an electrode terminal 251, and the electrode terminal 251 is disposed on the end cover 231 in an insulated manner. In some embodiments, the electrode terminal 251 extends between the end cover assembly 23 and the support member 24 in a thickness direction X of the end cover assembly, and is directly conductively connected to the tab 222. The tab 222 and the electrode terminal 251 may be conductively connected by welding, abutting, or the like. The first accommodating portion 242 on the support member 24 accommodates at least a portion of the electrode terminal 251 extending between the end cover assembly 23 and the support member 24.

As shown in FIG. 3, in some embodiments, the terminal assembly 25 includes an electrode terminal 251 and a current collecting member 252, the electrode terminal 251 is disposed on the end cover 231 in an insulated manner, the current collecting member 252 is located between the end cover assembly 23 and the support member 24, the current collecting member 252 is conductively connected to the tab 222, and the current collecting member 252 is conductively connected to the electrode terminal 251. The tab 222 and the current collecting member 252 may be conductively connected by welding, abutting, or the like. The current collecting member 252 and the electrode terminal 251 may be conductively connected by welding, abutting, or the like. The first accommodating portion 242 on the support member 24 accommodates at least a portion of the current collecting member 252.

In an embodiment where two terminal assemblies 25 are disposed on one end cover assembly 23, two first accommodating portions 242 may be disposed on the first surface 241, facing the end cover assembly 23, of the corresponding support member 24, the first accommodating portions 242 and the terminal assemblies 25 correspond one to one, the terminal assembly 25 extends between the end cover assembly 23 and the support member 24 in the thickness direction X of the end cover assembly, and the first accommodating portion 242 is used for accommodating at least a portion of the corresponding terminal assembly 25 extending between the end cover assembly 23 and the support member 24 in the thickness direction X of the end cover assembly.

The first surface 241, facing the end cover assembly 23, of the support member 24 is provided with the first accommodating portion 242, which can accommodate at least a portion of the terminal assembly 25 extending to the support member 24 and the end cover assembly 23, thereby reducing the size of a whole formed by the terminal assembly 25 and the support member 24 in the thickness direction of the end cover assembly, reducing occupation of the internal space of the shell 21 by the whole formed by the terminal assembly 25 and the support member 24, and increasing the energy density of the battery cell 20.

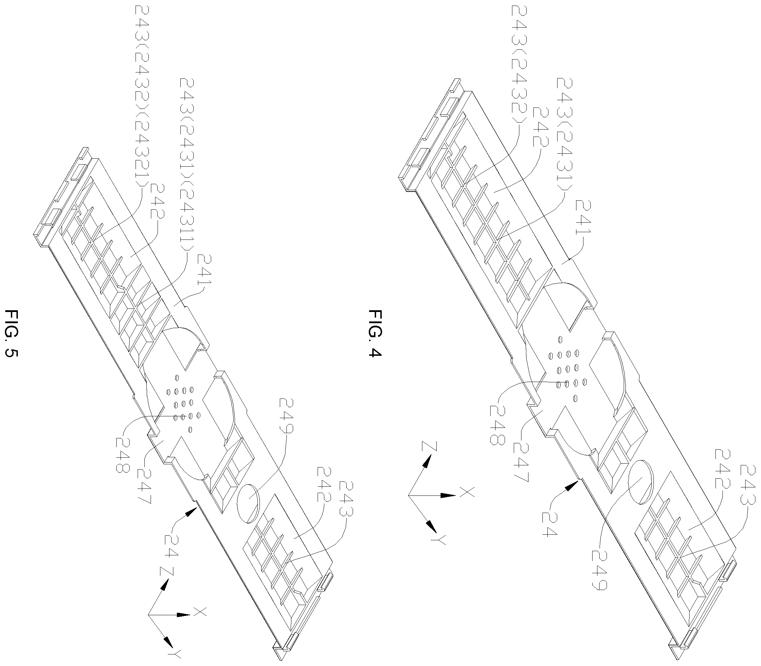

As shown in FIGs. 4 to 7, in some embodiments, the support member 24 is provided with a first reinforcing portion 243, and the first reinforcing portion 243 is disposed in the first accommodating portion 242.

The first reinforcing portion 243 may be reinforcing ribs disposed in the first accommodating portion 242. The first reinforcing portion 243 may include a plurality of reinforcing ribs, which may be spaced in a linear direction or arranged crisscross.

The first accommodating portion 242 has side surfaces and a bottom surface, and the side surfaces surround edges of the bottom surface. There are many ways to connect the reinforcing ribs within the first accommodating portion 242. For example, two ends of the reinforcing ribs may be connected to the two opposite side surfaces of the first accommodating portion 242. For another example, two ends of the reinforcing ribs may be connected to the two opposite side surfaces of the first accommodating portion 242 and the reinforcing ribs are connected to the bottom surface of the first accommodating portion 242.

The first accommodating portion 242 enables the strength of the support member 24 at a corresponding position of the first accommodating portion 242 to be lower than that of the support member 24 at other positions, and the first reinforcing portion 243 is disposed in the first accommodating portion 242 to increase the strength of the support member 24 at the corresponding position of the first accommodating portion 242 and improve the supporting ability of the support member 24.

The portion of the terminal assembly 25 extending to the end cover assembly 23 and the support member 24 may have different relative positional relationships with the first reinforcing portion 243. By an example that the terminal assembly 25 includes an electrode terminal 251 and a current collecting member 252 and the current collecting member 252 is located between the end cover assembly 23 and the support member 24, the relative positional relationships between the portion of the terminal assembly 25 extending to the end cover assembly 23 and the support member 24 and the first reinforcing portion 243 will be described in detail.

As shown in FIGs. 4 and 5, in some embodiments, the first reinforcing portion 243 includes a first portion 2431 and a second portion 2432, the terminal assembly 25 includes a current collecting member 252 extending between the end cover assembly 23 and the support member 24, a projection of the first portion 2431 on the support member 24 does not overlap with that of the current collecting member 252 on the support member 24 in the thickness direction X of the end cover assembly, and the second portion 2432 is located between the current collecting member 252 and the bottom surface of the first accommodating portion 242. FIGs. 4 and 5 show only the case that the first reinforcing portion 243 is in the first accommodating portion 242, and do not show the relative positional relationship between the current collecting member 252 and the first reinforcing portion 243.

In an embodiment where the first reinforcing portion 243 includes a plurality of reinforcing ribs, the first portion 2431 may be some of the reinforcing ribs, and the second portion 2432 may be other of the reinforcing ribs. The first portion 2431 may be a portion of a reinforcing rib, and the second portion 2432 may be the other portion of the reinforcing rib. It may be understood that, for a reinforcing rib, the projection of a portion of the first reinforcing portion 243 on the support member 24 in the thickness direction X of the end cover assembly does not overlap with the current collecting member 252, and the other portion of the first reinforcing portion 243 is located between the current collecting member 252 and the bottom surface of the first accommodating portion 242 in the thickness direction X of the end cover assembly.

The projection of the first portion 2431 of the first reinforcing portion 243 on the support member 24 does not overlap with that of the current collecting member 252 on the support member 24, the second portion 2432 is located between the current collecting member 252 and the bottom surface of the first accommodating portion 242, and the first reinforcing portion 243 reinforces the corresponding position of the first accommodating portion 242 as much as possible, so as to further increase the structural strength of the support member 24.

As shown in FIG. 5, further, in the thickness direction X of the end cover assembly, a surface, facing the end cover assembly 23, of the first portion 2431 is closer to the first surface 241 than a surface, facing the end cover assembly 23, of the second portion 2432.

The surface, facing the end cover assembly 23, of the first portion 2431 is defined as a first abutting surface 24311, and the surface, facing the end cover assembly 23, of the second portion 2432 is defined as a second abutting surface 24321, that is, in the thickness direction X of the end cover assembly, the first abutting surface 24311 is closer to the first surface 241 than the second abutting surface 24321.

The surface, facing the end cover assembly 23, of the first portion 2431 includes all the surface, facing the end cover assembly 23, of the first portion 2431 in the thickness direction X of the end cover assembly, and the surface, facing the end cover assembly 23, of the second portion 2432 may be a surface closest to the first surface 241 in the surface, facing the end cover assembly 23, of the second portion 2432 in the thickness direction X of the end cover assembly. It may be understood that any surface, facing the end cover assembly 23, of the first portion 2431 in the thickness direction X of the end cover assembly is closer to the first surface 241 than the surface, closest to the first surface 241, of the second portion 2432 in the thickness direction X of the end cover assembly.

Of course, as shown in FIG. 4, in the thickness direction X of the end cover assembly, the distance between the surface, facing the end cover assembly 23, of the first portion 2431 and the first surface 241 may alternatively be the same as the distance between the surface, facing the end cover assembly 23, of the second portion 2432 and the first surface 241. It may be understood that the surface, facing the end cover assembly 23, of the first portion 2431 and the surface, facing the end cover assembly 23, of the second portion 2432 are coplanar.

The surface, facing the end cover assembly 23, of the first portion 2431 is closer to the first surface 241 than the surface, facing the end cover assembly 23, of the second portion 2432 of the first reinforcing portion 243 between the current collecting member 252 and the bottom surface of the first accommodating portion 242, so a side, facing the end cover assembly 23, of the second portion 2432 provides a larger space for accommodating the current collecting member 252, and the current collecting member 252 can be accommodated in the first accommodating portion 242 as much as possible in the thickness direction X of the end cover assembly, thereby reducing occupation of the internal space of the shell 21 by a whole formed by the current collecting member 252 and the support member 24, reducing occupation of the internal space of the shell 21 by the whole formed by the terminal assembly 25 and the support member 24, and increasing the energy density of the battery cell 20.

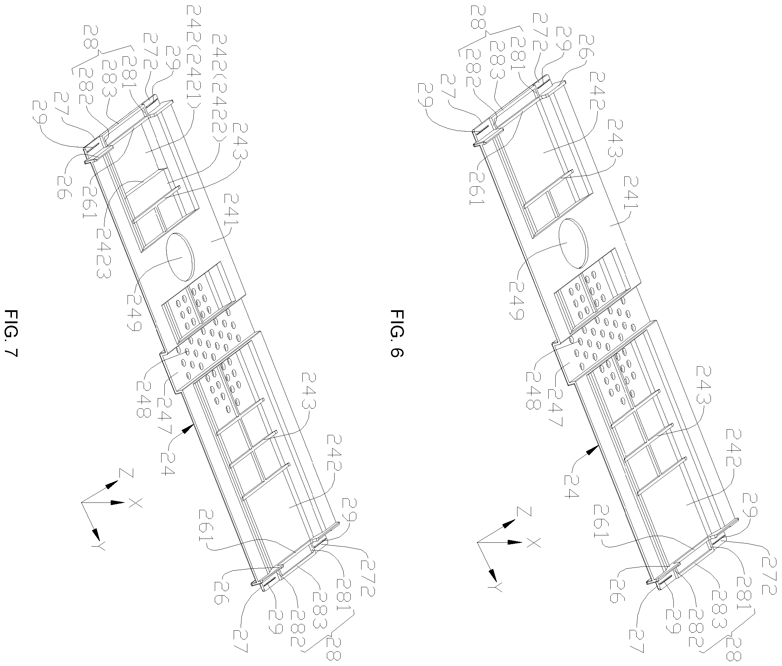

As shown in FIG. 6, in other embodiments, the terminal assembly 25 includes a current collecting member 252 extending between the end cover assembly 23 and the support member 24, and a projection of the current collecting member 252 on the support member 24 does not overlap with that of the first reinforcing portion 243 on the support member 24 in the thickness direction X of the end cover assembly.

In some embodiments, the first reinforcing portion 243 may be disposed at any position on the periphery of the current collecting member 252. In other embodiments, the first reinforcing portion 243 may be disposed around the current collecting member 252. FIG. 6 shows only the case that the first reinforcing portion 243 is in the first accommodating portion 242, and does not show the relative positional relationship between the current collecting member 252 and the first reinforcing portion 243.

The projection of the current collecting member 252 on the support member 24 does not overlap with that of the first reinforcing portion 243 on the support member 24, that is, the first reinforcing portion 243 avoids the current collecting member 252, which can not only increase the structural strength of the support member 24 at the corresponding position of the first accommodating portion 242, but also prevent mutual interference between the current collecting member 252 and the first reinforcing portion 243 from affecting the placement of the current collecting member 252.

As shown in FIG. 7, in other embodiments, the first accommodating portion 242 includes a first accommodating region 2421 and a second accommodating region 2422 in communication, a depth of the first accommodating region 2421 is greater than that of the second accommodating region 2422 in the thickness direction X of the end cover assembly, the current collecting member 252 is accommodated in the first accommodating region 2421, and the first reinforcing portion 243 is located in the second accommodating region 2422.

The depth of the first accommodating region 2421 refers to a size of depression of the first accommodating region 2421 from the first surface 241 towards the main body 221. The depth of the second accommodating region 2422 refers to a size of depression of the second accommodating region 2422 from the first surface 241 towards the main body 221. The first accommodating region 2421 is in communication with the second accommodating region 2422, and a step 2423 is formed between a bottom surface of the first accommodating region 2421 and a bottom surface of the second accommodating region 2422.

The current collecting member 252 is accommodated in the deeper first accommodating region 2421, and the first accommodating region 2421 provides a larger space for accommodating the current collecting member 252. The first reinforcing portion 243 is located in the second accommodating region 2422, and the first reinforcing portion 243 avoids the current collecting member 252, which can not only increase the structural strength of the support member 24 at the corresponding position of the first accommodating portion 242, but also prevent mutual interference between the current collecting member 252 and the first reinforcing portion 243 from affecting the placement of the current collecting member 252.

As shown in FIGs. 6 and 7, the support member 24 is provided with a first protrusion 26, and the first protrusion 26 protrudes from the first surface 241 towards the end cover assembly 23.

The first protrusion 26 may be in many structural forms. For example, the first protrusion 26 is a block, strip, or column. There may be one or more first protrusions 26. In an embodiment where there are more first protrusions 26, the first protrusions 26 are spaced on the support member 24.

The first protrusion 26 and the support member 24 may be integrally formed. The first protrusion 26 and the support member 24 may alternatively be separated and connected into an overall structure by welding, bonding, bolt connection, or the like.

The first protrusion 26 can support the end cover assembly 23 in a process of deformation of the end cover assembly 23 towards the interior of the shell 21, alleviate collapse of the end cover assembly 23, and alleviate stress on the support member 24, thereby alleviating extrusion on the electrode assembly 22.

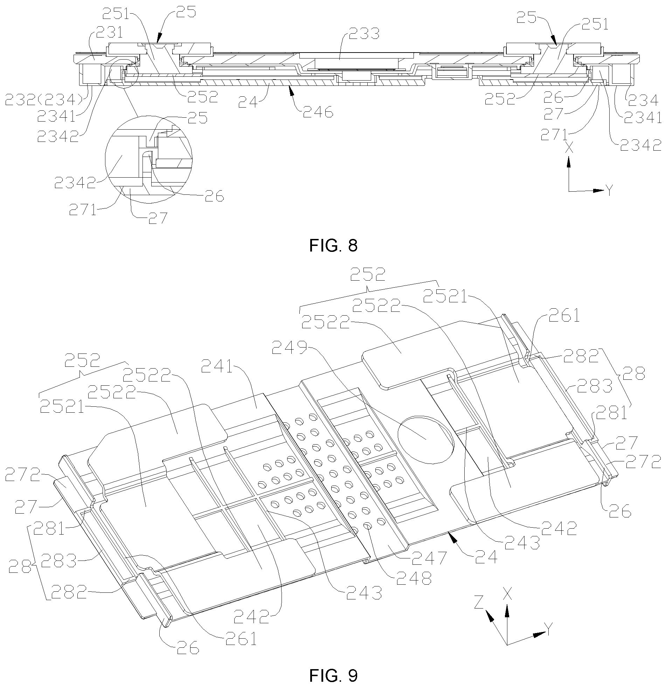

The first protrusion 26 may protrude from the first surface 241 towards the end cover assembly 23 to abut against the end cover assembly 23, so as to support the end cover assembly 23 and reduce the deformation of the end cover assembly 23 towards the interior of the shell 21 when subjected to external force. Of course, the first protrusion 26 can alternatively protrude from the first surface 241 towards the end cover assembly 23 to skip abutting against the end cover assembly 23. Therefore, as shown in FIG. 8, in some embodiments, in the thickness direction X of the end cover assembly, the first protrusion 26 is spaced from the end cover assembly 23.

In the thickness direction X of the end cover assembly, a gap is formed between an end, facing the end cover assembly 23, of the first protrusion 26 and the end cover assembly 23. Only when the end cover assembly 23 deforms close to the main body 221 and/or the support member 24 deforms close to the end cover assembly 23, can the first protrusion 26 abut against the end cover assembly 23.

The first protrusion 26 is spaced from the end cover assembly 23 in the thickness direction X of the end cover assembly, which provides a space for the deformation of the end cover assembly 23 towards the interior of the shell 21, and can achieve a buffering effect when the end cover assembly 23 is subjected to external impact, so as to protect the end cover assembly 23.

As shown in FIGs. 6, 7, and 8, in some embodiments, the first protrusion 26 is disposed at one end of the support member 24 in a first direction Y, the first accommodating portion 242 extends to the first protrusion 26, and the first direction Y is perpendicular to the thickness direction X of the end cover assembly.

In this embodiment, the first direction Y is parallel to a length direction of the support member 24. The first protrusion 26 is of a strip structure, and the first protrusion 26 extends to two opposite edges of the support member 24 in a second direction Z, which can increase the contact area between the first protrusion 26 and the end cover assembly 23 when abutting. The first protrusion 26 connects two opposite side surfaces of the first accommodating portion in the second direction Z, which can constrain the support member 24 in the second direction Z and reduce the risk of deformation of the support member 24 in the second direction Z. The second direction Z is consistent with a width direction of the support member 24. The first direction Y, the second direction Z, and the thickness direction X of the end cover assembly are perpendicular to each other.

In other embodiments, the first protrusion 26 may alternatively be located in a middle region of the support member 24, so that two ends of the support member 24 extend beyond the first protrusion 26 in the first direction Y.

The first protrusion 26 is disposed at one end of the support member 24 in the first direction Y to reduce a risk of interference between the first protrusion 26 and other structures (such as the current collecting member 252) located between the support member 24 and the end cover assembly 23.

The support member 24 has two ends in the first direction Y, and the first protrusion 26 may be disposed at only one of the two ends.

Of course, with continued reference to FIGs. 6, 7, and 8, in some embodiments, the first protrusions 26 are disposed at two ends of the support member 24 in the first direction Y.

The first protrusions 26 at the two ends of the support member 24 may have the same structure, for example, the two first protrusions 26 are of strip structures and extend to the edges of the support member 24 in the second direction Z. The first protrusions 26 at the two ends of the support member 24 may alternatively have different structures, for example, the first protrusion 26 at one end of the support member 24 is of a strip structure, and the first protrusion 26 at the other end of the support member 24 is of a column structure.

The first protrusions 26 are disposed at the two ends of the support member 24 in the first direction Y, so when the first protrusions 26 support the end cover assembly 23, the end cover assembly 23 can be evenly stressed, which is conducive to alleviating the deformation of the end cover assembly 23.

As shown in FIGs. 6, 7, and 9, in some embodiments, the first protrusion 26 is provided with an avoidance gap 261 for avoiding the extension of the terminal assembly 25 between the support member 24 and the end cover 231.

The gap runs through two sides of the first protrusion 26 in the first direction Y. In an embodiment where a plurality of first protrusions 26 are disposed on the support member 24, some of the first protrusions 26 may be provided with gaps, or all of the first protrusions 26 may be provided with gaps. The gap is in communication with the first accommodating portion 242 in the first direction Y.

For example, the portion of the terminal assembly 25 extending between the support member 24 and the end cover assembly 23 is the current collecting member 252 of the terminal assembly 25. As shown in FIG. 9, the current collecting member 252 includes a body portion 2521 and a first conductive portion 2522 that are connected, the body portion 2521 may be used for conductive connection with the electrode terminal 251, and the first conductive portion 2522 is connected to at least one side of the body portion 2521 in the second direction Z. FIG. 9 shows a case that the first conductive portions 2522 are connected to two sides of the body portion 2521 in the second direction Z. The first conductive portion 2522 is used for conductive connection with the tab 222. One end of the body portion 2521 extends beyond the first conductive portion 2522 in the first direction Y. The avoidance gap 261 may be used for avoiding the portion of the body portion 2521 that extends beyond the first conductive portion 2522 in the first direction Y.

The avoidance gap 261 facilitates mounting of the terminal assembly 25 and also avoids interference between the first protrusion 26 and the terminal assembly 25.

The support member 24 may be clamped by the end cover assembly 23 and the main body 221 of the electrode assembly 22, so that the support member 24 is located between the end cover assembly 23 and the main body 221. In order to improve the stability of the support member 24, in other embodiments, the support member 24 is connected to the end cover assembly 23, so as to fix the support member 24 to the end cover assembly 23.

The end cover assembly 23 and the support member 24 may be connected directly or indirectly. The end cover assembly 23 and the support member 24 may be or not be detachably connected.

The support member 24 is fixedly connected to the end cover assembly 23, which can maintain a stable position relationship between the support member 24 and the end cover assembly 23, improve the stability of the support member 24 in the shell 21, and support the main body 221 of the electrode assembly 22 more stably, thereby improving the stability of the electrode assembly 22 in the shell 21.

There are many ways to connect the support member 24 to the end cover assembly 23, for example, the support member 24 is detachably connected to the end cover assembly 23 by buckles, bolts, or the like. For another example, the support member 24 is connected to the end cover assembly 23 by hot melting, laser welding, or ultrasonic welding, or the support member 24 is bonded with the end cover assembly 23 by a bonding member.

The hot melting, laser welding, and ultrasonic welding are all manufacturing processes and technologies that connect metal or other thermoplastic materials such as plastics in a heating, high temperature, or high pressure manner. The support member 24 and the end cover 231 are detachably connected by means of the hot melting, laser welding, or ultrasonic welding.

A bonding member may alternatively be disposed between the support member 24 and the end cover assembly 23 to bond the support member 24 and the end cover assembly 23. The bonding member may be formed by solidification of liquid glue applied between the support member 24 and the end cover assembly 23, or the bonding member may be an adhesive tape pasted between the support member 24 and the end cover assembly 23.

The support member 24 is connected to the end cover assembly 23 by hot melting, laser welding, or ultrasonic welding, or the support member 24 is bonded with the end cover assembly 23 by a bonding member, so the connection is simple and high-precision positioning is not required in the connection process.

As shown in FIGs. 6, 7, 8, and 9, in some embodiments, a first connecting portion 27 is disposed on at least one end of the support member 24 in the first direction Y; the end cover assembly 23 has a second connecting portion 234, the second connecting portion 234 corresponds to the first connecting portion 27 one to one, the second connecting portion 234 is opposite to the support member 24 in the first direction Y, and the first direction Y is perpendicular to the thickness direction X of the end cover assembly; and the first connecting portion 27 abuts against the second connecting portion 234 in the thickness direction X of the end cover assembly.

The support member 24 may be provided with the first connecting portion 27 at one end in the first direction Y or the first connecting portions 27 at two ends in the first direction Y.

The first connecting portion 27 and the support member 24 may be integrally formed. The first connecting portion 27 and the support member 24 may alternatively be separated and connected into an overall structure by welding, bonding, bolt connection, or the like.

In an embodiment where the support member 24 is provided with a first protrusion 26, the support member 24, the first protrusion 26, and the first connecting portion 27 may be integrally formed, or the support member 24, the first protrusion 26, and the first connecting portion 27 may be separated and connected into an overall structure by welding, bonding, bolt connection, or the like.

In the first direction Y, the first connecting portion 27 extends from one end of the support member 24 away from the support member 24. An end, connected with the first connecting portion 27, of the support member 24 may be spaced from or abut against the corresponding second connecting portion 234 in the first direction Y.

The first connecting portion 27 and the second connecting portion 234 abut against and are connected with each other in the thickness direction X of the end cover assembly, so that the support member 24 is indirectly connected to the end cover assembly 23 through the first connecting portion 27.

The first connecting portion 27 abuts against the second connecting portion 234 in the thickness direction X of the end cover assembly to fix the support member 24 to the end cover assembly 23, so the connection is simple and convenient.

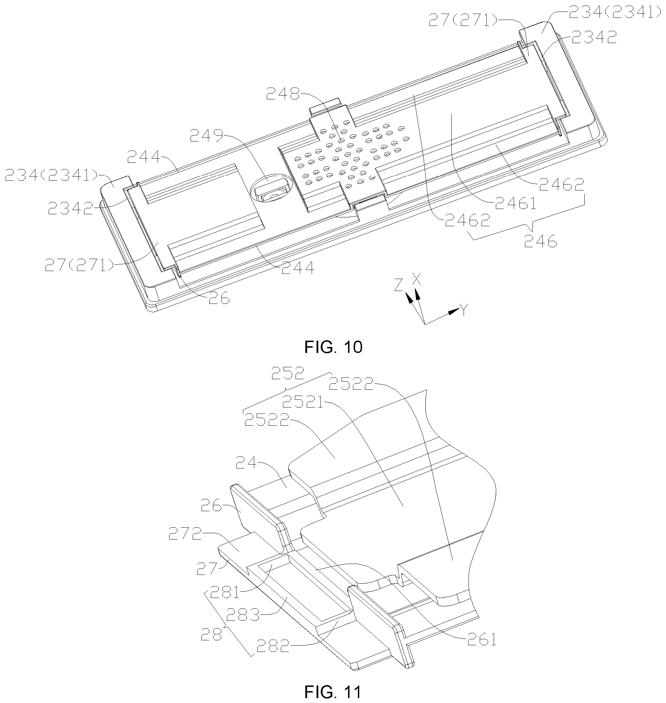

As shown in FIG. 10, in some embodiments, in the thickness direction X of the end cover assembly, the second connecting portion 234 has a second surface 2341 facing the main body 221, the second surface 2341 is provided with a second accommodating portion 2342, and the second accommodating portion 2342 is used for accommodating the first connecting portion 27.

The second accommodating portion 2342 may be a groove recessed from the second surface 2341 away from the end cover assembly 23. The first connecting portion 27 may be fully accommodated in the second accommodating portion 2342. Alternatively, a part of the first connecting portion 27 may be accommodated in the second accommodating portion 2342, and the other part may extend out of the second accommodating portion 2342 in the thickness direction X of the end cover assembly.

In a case that the first connecting portion 27 is accommodated in the second accommodating portion 2342, in the thickness direction X of the end cover assembly, a surface, facing the end cover assembly 23, of the first connecting portion 27 may be attached to a bottom surface of the second accommodating portion 2342, or a surface, facing the end cover assembly 23, of the first connecting portion 27 may be spaced from a bottom surface of the second accommodating portion 2342.

The second accommodating portion 2342 is disposed on the second surface 2341 of the second connecting portion 234 facing the main body 221, where the second accommodating portion 2342 can reduce the size of the overall structure formed by the support member 24 and the end cover assembly 23 in the thickness direction X of the end cover assembly, and reduce the occupation of the internal space of the shell 21 by the support member 24.

In other embodiments, the second surface 2341 may not be provided with a second accommodating portion 2342, and the first connecting portion 27 may directly or indirectly abut against the second surface 2341.

As shown in FIG. 10, in some embodiments, in the thickness direction X of the end cover assembly, the first connecting portion 27 has a third surface 271 facing the main body 221, and the distance between the second surface 2341 and the third surface 271 is H, which satisfies H ≤ 2 mm.

The distance H between the second surface 2341 and the third surface 271 in the thickness direction X of the end cover assembly may be 0 mm, 0.5 mm, 1 mm, 1.5 mm, 1.8 mm, or the like.

In an embodiment where the second surface 2341 is provided with a second accommodating portion 2342, the third surface 271 may be located inside the second accommodating portion 2342 or outside the second accommodating portion 2342. In a case that the second surface 2341 is located inside the second accommodating portion 2342, if the distance between the second surface 2341 and the third surface 271 in the thickness direction X of the end cover assembly is too long, the difficulty in connecting the first connecting portion 27 and the second connecting portion 234 increases. In a case that the second surface 2341 is located outside the second accommodating portion 2342, if the distance between the second surface 2341 and the third surface 271 in the thickness direction X of the end cover assembly is too long, the size of the portion of the first connecting portion 27 extending out of the second accommodating portion 2342 in the thickness direction of the end cover assembly 231 is too large, so that the overall structure formed by the support member 24 and the end cover assembly 23 is too large in the thickness direction X of the end cover assembly.

The distance between the second surface 2341 of the second connecting portion 234 facing the main body 221 and the third surface 271 of the first connecting portion 27 facing the main body 221 is less than or equal to 2 mm, which alleviates a problem of interference with other structures in the shell 21 due to the size of the first connecting portion 27 extending out of the first accommodating portion 242 in the thickness direction X of the end cover assembly, or alleviates a problem of inconvenient mounting due to excessive depression of the first connecting portion 27 into the first accommodating portion 242 in the thickness direction X of the end cover assembly, and can also alleviate a problem of local force on the electrode assembly 22 due to an excessive height difference between the second surface 2341 and the third surface 271 in the thickness direction X of the end cover assembly, thereby reducing a risk of uneven force on the main body 221 of the electrode assembly 22 due to an excessive position difference between the second surface 2341 and the third surface 271.

With continued reference to FIG. 10, in some embodiments, the second surface 2341 and the third surface 271 are coplanar.

It may be understood that the distance H between the second surface 2341 and the third surface 271 is 0 mm in the thickness direction X of the end cover assembly.

If the second surface 2341 and the third surface 271 are coplanar, there is no height difference between the second surface 2341 and the third surface 271 in the thickness direction X of the end cover assembly, which prevents local force on the electrode assembly 22 at corresponding positions of the second surface 2341 and the third surface 271, and is conducive to even force on the main body 221 of the electrode assembly 22.

As shown in FIG. 11, in some embodiments, the first connecting portion 27 is provided with a second reinforcing portion 28, and the second reinforcing portion 28 is connected to one end of the support member 24 in the first direction Y.

The second reinforcing portion 28 may be reinforcing ribs disposed on the first connecting portion 27, and the first connecting portion 27 and one end of the support member 24 are connected to the second reinforcing portion 28. The second reinforcing portion 28 may be connected to the surface of the first connecting portion 27 in the thickness direction X of the end cover assembly.

The second reinforcing portion 28 may be in many structural shapes, for example, the second reinforcing portion 28 is hollow square or U-shaped. As shown in FIG. 11, the second reinforcing portion 28 includes a first reinforcing segment 281, a second reinforcing segment 282, and a third reinforcing segment 283, one end of the first reinforcing segment 281 is connected to one end of the support member 24 in the first direction Y, the second reinforcing segment 282 is spaced from the first reinforcing segment 281 in the second direction Z, one end of the second reinforcing segment 282 is connected to one end of the support member 24 in the first direction Y, the first reinforcing segment 281 and the second reinforcing segment 282 are connected through the third reinforcing segment 283, and the first reinforcing segment 281, the second reinforcing segment 282, and the third reinforcing segment 283 jointly form a U-shaped first reinforcing portion 243.

The second reinforcing portion 28 can increase the strength of the first connecting portion 27 and improve the stability of connection between the first connecting portion 27 and the second connecting portion 234.

The second reinforcing portion 28 may be disposed on any surface of the first connecting portion 27 in the thickness direction X of the end cover assembly. In some embodiments, the second reinforcing portion 28 is disposed on a surface of the first connecting portion 27 away from the end cover assembly 23 in the thickness direction X of the end cover assembly, that is, the second reinforcing portion 28 is disposed on the third surface 271. The second reinforcing portion 28 may alternatively be disposed on a fourth surface 272, facing the end cover assembly 23, of the first connecting portion 27 in the thickness direction X of the end cover assembly.

As shown in FIG. 11, in some embodiments, in the thickness direction X of the end cover assembly, the second reinforcing portion 28 is disposed on the fourth surface 272, facing the end cover assembly 23, of the first connecting portion 27, and the second reinforcing portion 28 is used for abutting against the second connecting portion 234.

In the thickness direction X of the end cover assembly, the second reinforcing portion 28 may abut against the second connecting portion 234, so that the second reinforcing portion 28 always supports the end cover assembly 23 to reduce a risk of collapse of the end cover assembly 23 under force. In the thickness direction X of the end cover assembly, the second reinforcing portion 28 may alternatively be spaced from the second connecting portion 234, and the end cover assembly 23 is allowed to undergo certain deformation close to the main body 221 and then to abut against the second reinforcing portion 28, so as to avoid damage of the end cover assembly 23 due to excessive deformation.

The second reinforcing portion 28 is used for abutting against the second connecting portion 234, so in the process of deformation of the end cover assembly 23 towards the interior of the shell 21 under force, the second reinforcing portion 28 can also alleviate the force on the first connecting portion 27, thereby reducing a risk of damage of the first connecting portion 27.

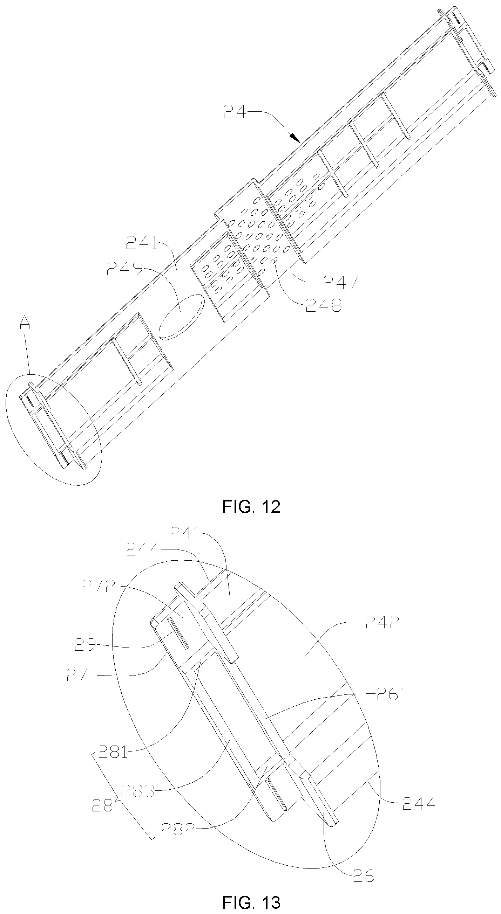

In an embodiment where the support member 24 is connected to the end cover assembly 23 by hot melting, laser welding, or ultrasonic welding, as shown in FIGs. 12-17, the fourth surface 272 is further provided with a fusion portion 29, and the fusion portion 29 is used for connecting the first connecting portion 27 and the second connecting portion 234 after melting.

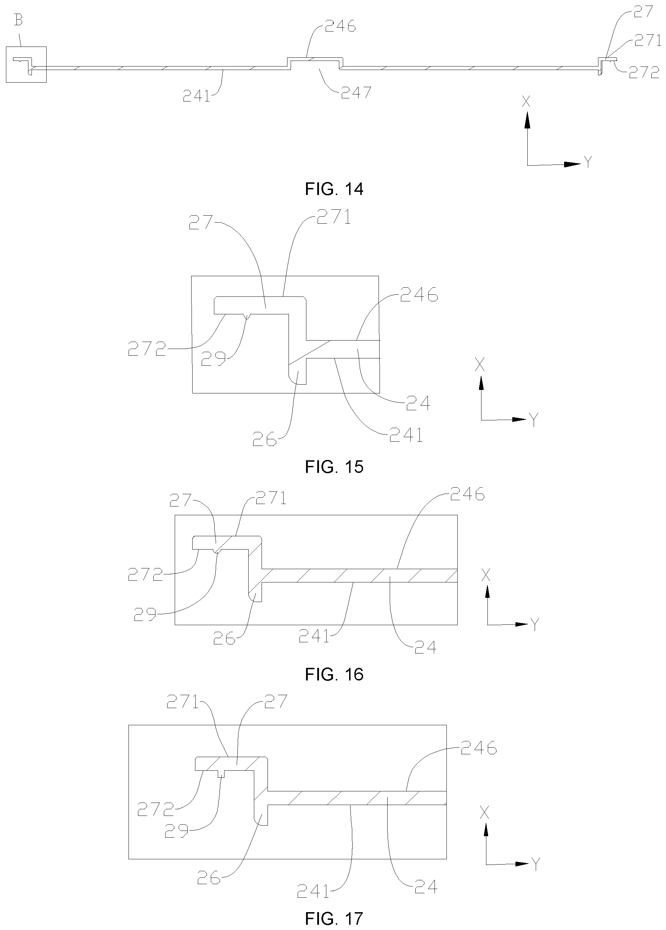

Before melting, the fusion portion 29 is a protrusion protruding from the fourth surface 272 towards the end cover assembly 23. The fusion portion 29 may be of a columnar structure, a strip structure, a block structure, or the like. The cross-sectional area of the fusion portion 29 may be triangular (shown in FIGs. 14 and 15), semicircular (shown in FIG. 16), elliptical, rectangular (shown in FIG. 17), or the like.

In an embodiment where a second reinforcing portion 28 is disposed on the first connecting portion 27 and the second reinforcing portion 28 is disposed on the fourth surface 272 of the first connecting portion 27, a height of the fusion portion 29 protruding from the fourth surface 272 towards the end cover assembly 23 may be greater than that of the second reinforcing portion 28 protruding from the fourth surface 272 towards the end cover assembly 23 before melting. After melting, the height of the fusion portion 29 protruding from the fourth surface 272 towards the end cover assembly 23 may be greater than or less than or equal to that of the second reinforcing portion 28 protruding from the fourth surface 272 towards the end cover assembly 23.

After heating, laser action, or ultrasonic action, the fusion portion 29 changes from a solid state to a molten state to connect the first connecting portion 27 and the second connecting portion 234, that is, the first connecting portion 27 and the second connecting portion 234 are indirectly connected through the fusion portion 29, so the first connecting portion 27 and/or the second connecting portion 234 may not be melted. The fusion portion 29 can reduce a risk of strength decrease caused by melting of the first connecting portion 27 and the second connecting portion 234 when the first connecting portion 27 and the second connecting portion 234 are connected.

There may be one or more fusion portions 29. In some embodiments, a plurality of fusion portions 29 are further disposed on the fourth surface 272, some of the fusion portions 29 are located on one side of the second reinforcing portion 28 in the second direction Z, the other of the fusion portions 29 are located on the other side of the second reinforcing portion 28 in the second direction Z, and the first direction Y, the thickness direction X of the end cover assembly, and the second direction Z are perpendicular to each other.

The fusion portions 29 are disposed on two sides of the second reinforcing portion 28 in the second direction Z, and the fusion portions 29 can be melted on the two sides of the second reinforcing portion 28 to connect the first connecting portion 27 and the second connecting portion 234, thereby improving connection stability.

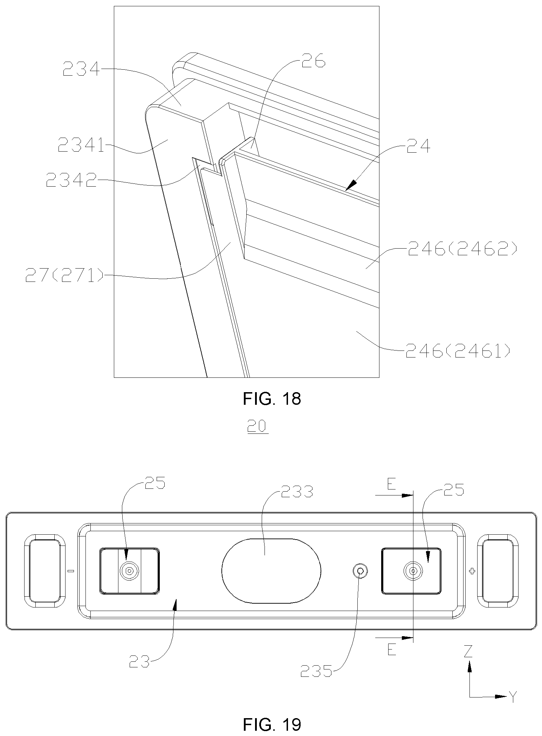

As shown in FIG. 18, in some embodiments, the fusion portion 29 protrudes from the fourth surface 272.

After the fusion portion 29 is melted and connects the first connecting portion 27 and the second connecting portion 234, the fusion portion 29 is only partially melted, and its non-melted portion protrudes from the fourth surface 272.

The fusion portion 29 protrudes from the fourth surface 272, and when the first connecting portion 27 and the second connecting portion 234 are connected, only the fusion portion 29 is melted, and the fusion portion 29 is not completely melted, so the first connecting portion 27 may not be melted, which ensures the strength of the first connecting portion 27.

In some embodiments, the support member 24 is used for supporting the main body 221.

The support member 24 is an insulating member to avoid short-circuiting caused by contact between the support member 24 and the electrode assembly 22. The support member 24 has a fifth surface 246 opposite to the first surface 241 in the thickness direction X of the end cover assembly, and at least a portion of the fifth surface 246 abuts against the main body 221, so that the support member 24 supports the main body 221. In a case that the battery cell 20 is inverted, the support member 24 supports a lower part of the main body 221 to bear the weight of the main body 221, and the fifth surface 246 of the support member 24 abuts against an end surface of the main body 221, which can not only limit the electrode assembly 20, but also prevent the tab 222 from being inversely inserted into the main body 221.

The support member 24 supports the main body 221 to limit the electrode assembly 22 within the shell 21, so as to alleviate the degree of shaking of the electrode assembly 22 within the shell 21.

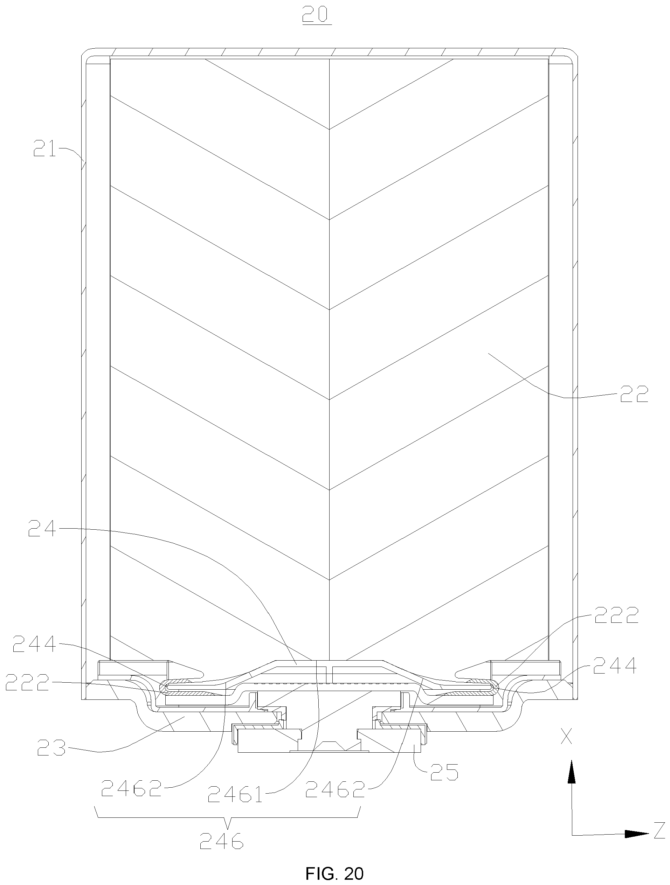

Because the support member 24 supports the main body 221 of the electrode assembly 22, the tab 222 may have different positional relationships with the support member 24. For example, as shown in FIGs. 19 and 20, in some embodiments, the tab 222 is bent around a first edge 244 of the support member 24, and the first edge 244 is an edge of the support member 24 in its width direction.

In the thickness direction X of the end cover assembly, a portion of the tab 222 is located on a side of the support member 24 facing the main body 221, the other portion of the tab 222 is bent around the first edge 244 to a side, facing the end cover assembly 23, of the support member 24, and the portion of the tab 222 on the side, facing the end cover assembly 23, of the support member 24 is electrically connected to the current collecting member 252. The width direction of the support member 24 is parallel to the second direction Z.

The tab 222 is bent around the first edge 244 of the support member 24, and the support member 24 can support the tab 222 to prevent the tab 222 from being inversely inserted into the main body 221.

Of course, the support member 24 and the tab 222 may alternatively have other relative positions. For example, the support member 24 is provided with a through hole, and the tab 222 passes through the through hole to the side, facing the end cover assembly 23, of the support member 24 and is electrically connected to the current collecting member 252.

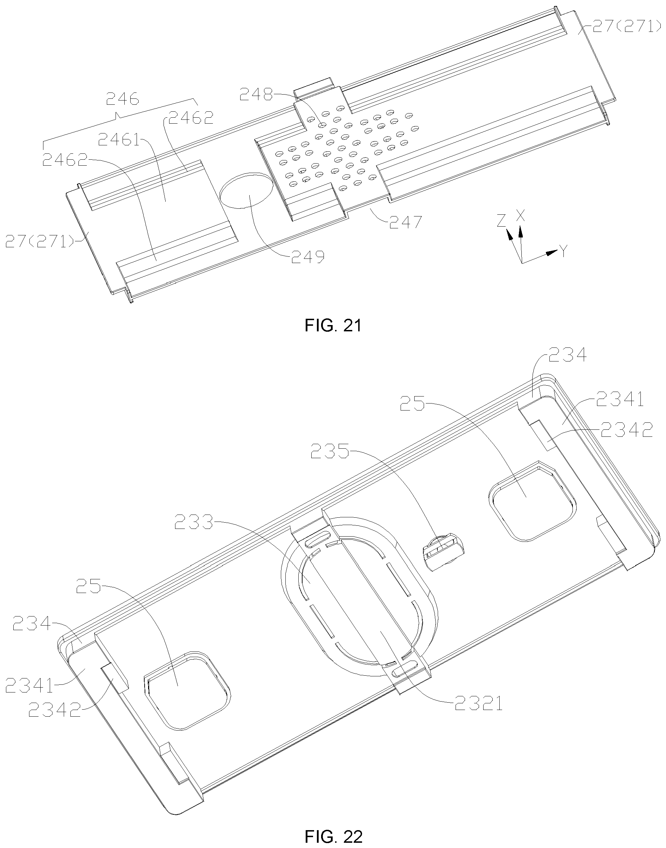

As shown in FIGs. 19-21, in some embodiments, the support member 24 has a fifth surface 246 facing the main body 221 and abutting against the main body 221 in the thickness direction of the end cover 231, the fifth surface 246 includes a support portion 2461 and two edge portions 2462, the two edge portions 2462 are connected to two sides of the support portion 2461 separately in the width direction of the support member 24, and the edge portions 2462 tilt from the support portion 2461 towards the end cover assembly 23 gradually.

The width direction of the support member 24 is parallel to the second direction Z. In some embodiments, the first edge 244 may be an edge where the edge portion 2462 deviates from the support portion 2461 in the second direction Z.

The support portion 2461 of the fifth surface 246 directly abuts against the main body 221. The position of the edge portion 2462 corresponds to a portion of the tab 222 on the side of the support member 24 facing the main body 221, and the edge portion 2462 tilts from the support portion 2461 towards the end cover assembly 23 gradually, which can match the space between the edge portion 2462 and the main body 221 with the volume of the portion of the tab 222 on the side of the support member 24 facing the main body 221. The edge portion 2462 abuts against the portion of the tab 222 on the side of the support member 24 facing the main body 221, so as to indirectly abut against the main body 221. The support portion 2461 and the edge portions 2462 jointly support the electrode assembly 22, thereby limiting the electrode assembly 22. The support portion 2461 may be formed by thinning the side of the support member 24 facing the main body 221 at a position corresponding to the tab 222.

The edge portion 2462 tilts from the support portion 2461 towards the end cover assembly 23 gradually, and the support member 24 forms a space between the position corresponding to the edge portion 2462 and the main body 221 to accommodate the tab 222, so that the tab 222 can be folded around the first edge 244.

As shown in FIGs. 3, 21, and 22, in an embodiment where the end cover assembly 23 is provided with a pressure relief mechanism 233, a second protrusion 2321 protruding in a direction facing the electrode assembly 22 is formed at a position where the insulating member 232 of the end cover assembly 23 corresponds to the pressure relief mechanism 233, the first surface 241 of the support member 24 is further provided with a third accommodating portion 247, and the second protrusion 2321 is at least partially accommodated in the third accommodating portion 247. The second protrusion 2321 is accommodated in the third accommodating portion 247, and the second protrusion 2321 cooperates with the third accommodating portion 247 to limit the support member 24, so as to avoid movement of the support member 24 within the shell 21.

In the thickness direction X of the end cover assembly, the second protrusion 2321 may abut against a bottom surface of the third accommodating portion 247 to limit the movement of the support member 24 away from the main body 221 and ensure that the support member 24 can stably support the main body 221, so that the gravity of the main body 221 of the electrode assembly 22 is not easily transmitted to the tab 222 and the tab 222 is less prone to bifurcation interpolation when the battery cell 20 is inverted.

In some embodiments, in the thickness direction X of the end cover assembly, a plurality of exhaust holes 248 are disposed in a region corresponding to the pressure relief mechanism 233 on the support member 24. The exhaust holes 248 allow gas inside the battery cell 20 to flow to the pressure relief mechanism 233 via the exhaust holes 248, so that the pressure relief mechanism 233 relieves pressure when the pressure inside the battery cell 20 reaches burst pressure.

In the thickness direction X of the end cover assembly, the plurality of exhaust holes 248 are evenly distributed within a projection range of the pressure relief mechanism 233 on the support member 24, which is conducive to smooth flowing of the gas inside the battery cell 20 to the pressure relief mechanism 233 via the exhaust holes 248.

In some embodiments, the end cover assembly 23 is provided with a first liquid injection hole 235, the support member 24 is provided with a second liquid injection hole 249, and the second liquid injection hole 249 corresponds to the first liquid injection hole 235 to facilitate liquid injection.

In some embodiments, the second liquid injection hole 249 may deviate from a central position of the support member 24. When the support member 24 is mounted on the end cover assembly 23, the second liquid injection hole 249 can play a foolproof role to reduce a risk of incorrect mounting to a certain extent.

An embodiment of the present application further provides a battery 100. The battery 100 includes a box 10 and the battery cell 20 provided in any of the foregoing embodiments, where the battery cell 20 is accommodated in the box 10.

An embodiment of the present application further provides an electrical device, which includes the battery 100 provided in the foregoing embodiment.

An embodiment of the present application provides a battery cell 20. The battery cell 20 includes a shell 21, an electrode assembly 22, an end cover assembly 23, a support member 24, and two terminal assemblies 25. The electrode assembly 22 is accommodated in the shell 21, and the end cover assembly 23 seals an opening 211 of the shell 21. Electrode terminals 251 of the two terminal assemblies 25 are disposed on the end cover assembly 23 in an insulated manner. In a thickness direction X of the end cover assembly, the support member 24 is disposed between the end cover assembly 23 and a main body 221 of the electrode assembly 22. A current collecting member 252 of the terminal assembly 25 is located between the end cover assembly 23 and the support member 24, a first surface 241, facing the end cover assembly 23, of the support member 24 is provided with two first accommodating portions 242, and the two first accommodating portions 242 are used for accommodating the current collecting members 252 of the two terminal assemblies 25 separately. A first reinforcing portion 243 is disposed in the first accommodating portion 242. The support member 24 is provided with first protrusions 26 at two ends in a first direction Y, and the first protrusions 26 extend from the first surface 241 towards the end cover assembly 23 and are spaced from the end cover assembly 23 in the thickness direction X of the end cover assembly. The two first protrusions 26 are provided with avoidance gaps 261 for avoiding the current collecting members 252.

The support member 24 is further provided with first connecting portions 27 at the two ends in the first direction Y, the end cover assembly 23 has second connecting portions 234, a third surface 271 of the second connecting portion 234 facing the main body 221 is provided with a second accommodating portion 2342, and the first connecting portions 27 are accommodated in the second accommodating portions 2342. In the thickness direction X, the distance H between the second surface 2341 and the third surface 271 of the first connecting portion 27 facing the main body 221 of the end cover assembly is ≤ 2 mm.

The first connecting portion 27 is provided with a fusion portion 29 on a fourth surface 272 facing the end cover assembly 23 in the thickness direction X of the end cover assembly, and the fusion portion 29 is melted to connect the first connecting portion 27 and the second connecting portion 234.

The fourth surface 272 of the first connecting portion 27 is provided with a second reinforcing portion 28, the second reinforcing portion 28 is connected to one end of the support member 24 in the first direction Y, and the second reinforcing portion 28 is used for abutting against the end cover assembly 23.

Described above are merely preferred embodiments of the present application, and the present application is not limited thereto. Various modifications and variations may be made to the present application for those skilled in the art. Any modifications, equivalent substitutions, improvements, and the like made within the spirit and principle of the present application shall fall within the protection scope of the present application.

## Claims

1. A battery cell, comprising:
a shell, having an opening;
an electrode assembly, comprising a main body and a tab protruding from the main body, wherein the electrode assembly is accommodated in the shell;
an end cover assembly, covering the opening;
a support member, located in the shell and disposed between the end cover assembly and the main body; and
a terminal assembly, at least partially extending between the end cover assembly and the support member, wherein the terminal assembly is conductively connected to the tab;
wherein the support member has a first surface facing the end cover assembly, the first surface is provided with a first accommodating portion, and the first accommodating portion is configured to accommodate at least a portion of the terminal assembly.

2. The battery cell according to claim 1, wherein the support member is provided with a first reinforcing portion, and the first reinforcing portion is disposed in the first accommodating portion.

3. The battery cell according to claim 2, wherein the first reinforcing portion comprises a first portion and a second portion, the terminal assembly comprises a current collecting member extending between the end cover assembly and the support member, wherein in a thickness direction of the end cover assembly, a projection of the first portion on the support member does not overlap with that of the current collecting member on the support member, and the second portion is located between the current collecting member and a bottom surface of the first accommodating portion.

4. The battery cell according to claim 3, wherein in the thickness direction of the end cover assembly, a surface of the first portion facing the end cover assembly is closer to the first surface than a surface of the second portion facing the end cover assembly.

5. The battery cell according to claim 2, wherein the terminal assembly comprises a current collecting member extending between the end cover assembly and the support member, and a projection of the current collecting member on the support member does not overlap with that of the first reinforcing portion on the support member in the thickness direction of the end cover assembly.

6. The battery cell according to claim 5, wherein the first accommodating portion comprises a first accommodating region and a second accommodating region communicated with each other, a depth of the first accommodating region is greater than that of the second accommodating region in the thickness direction of the end cover assembly, the current collecting member is accommodated in the first accommodating region, and the first reinforcing portion is located in the second accommodating region.

7. The battery cell according to any one of claims 1-6, wherein the support member is provided with a first protrusion, and the first protrusion protrudes in a direction towards the end cover assembly from the first surface.

8. The battery cell according to claim 7, wherein in the thickness direction of the end cover assembly, the first protrusion is spaced from the end cover assembly.

9. The battery cell according to claim 7 or 8, wherein the first protrusion is disposed at one end of the support member in a first direction, and the first accommodating portion extends to the first protrusion, wherein the first direction is perpendicular to the thickness direction of the end cover assembly.

10. The battery cell according to claim 9, wherein in the first direction, the first protrusions are disposed at both ends of the support member.

11. The battery cell according to any one of claims 7-10, wherein the first protrusion is provided with an avoidance gap for avoiding extension of the terminal assembly to a portion between the support member and the end cover.

12. The battery cell according to any one of claims 1-11, wherein the support member is connected to the end cover assembly, so as to fix the support member to the end cover assembly.

13. The battery cell according to claim 12, wherein the support member is connected to the end cover assembly by hot melting, laser welding, or ultrasonic welding, or the support member is bonded with the end cover assembly by a bonding member.

14. The battery cell according to claim 12 or 13, wherein a first connecting portion is disposed on at least one end of the support member in the first direction;
the end cover assembly has a second connecting portion, the second connecting portion is in one-to-one correspondence with the first connecting portion, the second connecting portion is opposite to the support member in the first direction, and the first direction is perpendicular to the thickness direction of the end cover assembly; and
the first connecting portion abuts against the second connecting portion in the thickness direction of the end cover assembly.

15. The battery cell according to claim 14, wherein in the thickness direction of the end cover assembly, the second connecting portion has a second surface facing the main body, the second surface is provided with a second accommodating portion, and the second accommodating portion is configured for accommodating the first connecting portion.

16. The battery cell according to claim 15, wherein in the thickness direction of the end cover assembly, the first connecting portion has a third surface facing the main body, and a distance between the second surface and the third surface is H, which satisfies H ≤ 2 mm.

17. The battery cell according to claim 16, wherein the second surface and the third surface are coplanar.

18. The battery cell according to any one of claims 14-17, wherein the first connecting portion is provided with a second reinforcing portion, and the second reinforcing portion is connected to one end of the support member in the first direction.

19. The battery cell according to claim 18, wherein in the thickness direction of the end cover assembly, the second reinforcing portion is disposed on a fourth surface of the first connecting portion facing the end cover assembly, and the second reinforcing portion is configured for abutting against the second connecting portion.

20. The battery cell according to claim 19, wherein the fourth surface is further provided with a fusion portion, and the fusion portion is configured for connecting the first connecting portion and the second connecting portion after melting.

21. The battery cell according to claim 20, wherein the fourth surface is further provided with a plurality of the fusion portions, one part of the fusion portions are located on one side of the second reinforcing portion in a second direction, the other part of the fusion portions are located on the other side of the second reinforcing portion in the second direction, and the first direction, the thickness direction of the end cover assembly, and the second direction are perpendicular to each other.

22. The battery cell according to claim 20 or 21, wherein the fusion portion protrudes from the fourth surface.

23. The battery cell according to any one of claims 1-22, wherein the support member is configured for supporting the main body.

24. The battery cell according to any one of claims 1-23, wherein the tab is bent around a first edge of the support member, and the first edge is an edge of the support member in its width direction.

25. The battery cell according to claim 24, wherein the support member has a fifth surface facing the main body and abutting against the main body in the thickness direction of the end cover assembly, the fifth surface comprises a support portion and two edge portions, the two edge portions are connected to two sides of the support portion respectively in a width direction of the support member, and the edge portions tilt in a direction towards the end cover assembly gradually from the support portion.

26. A battery, comprising:
a box; and
the battery cell according to any one of claims 1-25, wherein the battery cell is accommodated in the box.

27. An electrical device, comprising the battery according to claim 26.
